# EUROPEAN PATENT APPLICATION

(11) **EP 2 784 578 A1**
(43) Date of publication of application: **01.10.2014**
(21) Application number: 14159942.3
(22) Date of filing: 14.03.2014
(51) Int. Cl.: G03B 21/00, G03B 21/16, G03B 21/20

(54) **Projector and head-up display device**

(30) Priority: 29.03.2013 JP 2013071291
(71) Applicant: Funai Electric Co., Ltd., Daito city Osaka 574-0013 (JP)
(72) Inventor: Ishimoto, Koichi, Osaka 574-0013 (JP)
(74) Representative: Osha Liang SARL

(57) **Abstract**

The invention concerns a projector (1) including a light emitting element (11a-11c) that emits a projection light, a first temperature detector (13) that detects a temperature around the light emitting element (11a-11c), a heating and cooling unit (14a-14c) that heats or cools the light emitting element based on the detected temperature, and an abnormality processor (254) that determines whether or not the first temperature detector (13) is detecting the temperature normally based on a detection result of the first temperature detector (13).

## Description

### Technical Field

The present invention relates generally to a projector and head-up display (also termed a "HUD") device.

### Background Art

In recent years, various types of head-up display devices have been proposed that allow a user to visually recognize a projected image formed on a windshield or the like of a vehicle together with a foreground of the vehicle. For example, in a head-up display device of Japanese Unexamined Patent Application No. 2011-180541, a projected image is formed by a laser light emitted from a laser diode that scans a semipermeable combiner affixed to a windshield.

The laser diode that emits the laser light has temperature characteristics and the characteristics of the laser light change greatly according to the temperature of the laser diode. Therefore, in order to steadily operate the laser diode, it must be operated within a rated guaranteed temperature range. Accordingly, a laser diode is disposed with a thermistor that monitors the temperature and a Peltier element for heating and cooling. Furthermore, the temperature of the laser diode is controlled by a heating or cooling operation by the Peltier element based on a temperature detected by the thermistor.

In Japanese Unexamined Patent Application No. 2011-180541, in the event of a thermistor failure due to damage, disconnection, or the like, normal temperature control of the laser diode cannot be performed because the thermistor is not detecting the temperature normally. Therefore, malfunctions may be generated in the heating and cooling of the laser diode. When the laser diode operates outside of the rated guaranteed temperature range, the laser diode cannot steadily operate. Moreover, when the laser diode is operated at a temperature that exceeds the maximum rating, emission lifetime is shortened due to degradation, and it may be damaged.

### Summary of the Invention

According to one or more embodiments of the present invention, a projector and head-up display device may prevent malfunction in the heating and cooling of a light emitting element or a light source even when the temperature of the light emitting element cannot be detected normally.

A projector according to one or more embodiments of the present invention may comprise a light emitting element that emits a projection light, a temperature detector that detects a temperature around the light emitting element, a heating and cooling unit that heats or cools the light emitting element based on the detected temperature, and an abnormality processor that determines whether or not the temperature detector is detecting the temperature normally based on a detection result of the temperature detector.

According to one or more embodiments, the light emitting element is a laser diode.

According to one or more embodiments, the first temperature detector is a thermistor.

According to one or more embodiments, the heating and cooling unit heats or cools the light emitting element based on the temperature detected by the temperature detector. Moreover, a change of the temperature that the temperature detector detects may indicate whether or not the light emitting element is being heated or cooled. Therefore, for example, the temperature detector may not be detecting the temperature normally if there is no change in the temperature detected by the temperature detector when the heating or cooling units heat or cool the light emitting element. Therefore, for example, the abnormality processor can determine whether or not the temperature detector is detecting the temperature normally based on a detection result of the temperature detector and an operation of the heating and cooling unit. Malfunction of heating and cooling the light emitting element can thus be prevented even in the event that the temperature detector cannot detect the temperature normally.

According to one or more embodiments, the projector may further comprise a current detector that detects a value of a current supplied to the heating and cooling unit, wherein the abnormality processor determines whether or not the temperature detector is detecting the temperature normally based on the detection result of the temperature detector and a detection result of the current detector.

According to this configuration, for example, a change in a current value detected by the current detector may indicate the operation of the heating and cooling unit. Accordingly, the abnormality processor, by comparing the change in the temperature that the temperature detector detects with the change in the current value that the current detector detects, can determine whether or not the temperature detector is detecting the temperature normally.

According to one or more embodiments, for example, the projector may further comprise a switch that switches an operation of the heating and cooling unit, and a voltage detector that detects a voltage applied to the heating and cooling unit, wherein the abnormality processor determines whether or not the temperature detector is detecting the temperature normally based on the detection result of the temperature detector and a detection result of the voltage detector.

According to this configuration, for example, a change in the voltage applied to the heating and cooling unit, the operation thereof switched by the switch, can determine the operation of the heating and cooling unit. Accordingly, the abnormality processor, by comparing the change in the temperature that the temperature detector detects with the change in the voltage that the voltage detector detects, can determine whether or not the temperature detector is detecting the temperature normally.

According to one or more embodiments, the projector may further comprise an operation controller that performs a protection operation of the light emitting element, wherein the operation controller may perform a notification operation of a temperature abnormality of the light emitting element when the temperature detector is determined to be not detecting the temperature normally.

According to this configuration, for example, the protection operation of the light emitting element can be automatically executed, or the notification operation of the temperature abnormality can prompt a user to execute the protection operation of the light emitting element in the event that the temperature detector is determined to be not detecting the temperature normally. Operation failures and breakdowns of the light emitting element can therefore be prevented.

According to one or more embodiments, the protection operation includes a lowering of an emission amount of the light emitting element, disabling emission of the light emitting element, and disabling of the projector.

According to this configuration, for example, the protection operation prevents degradation or damage of the light emitting element and can extend the life of the light emitting element.

According to one or more embodiments, the projector may further comprise a plurality of temperature detectors, wherein a second temperature detector detects the temperature when a first temperature detector is determined to be not detecting the temperature normally.

According to this configuration, for example, one among the plurality of temperature detectors can detect the temperature around the light emitting element. Conditions where the temperature of the light emitting element cannot be detected can therefore be made difficult to generate.

A head-up display device may comprise a projector according to one or more embodiments of the present invention. Further, a method for maintaining proper operation of a projector according to one or more embodiments may comprise detecting a temperature in the projector; performing either a heating process or a cooling process based on the detected temperature; redetecting the temperature in the projector; and determining whether or not the temperature was detected normally based on the redetected temperature.

According to this configuration, for example, the heating and cooling unit can heat or cool the light emitting element based on the temperature detected by the temperature detector. Moreover, the change of the temperature that the temperature detector detects can indicate whether or not the light emitting element is being heated or cooled. Therefore, the temperature detector may not be detecting the temperature normally if there is no change in the temperature detected by the temperature detector when the heating or cooling unit heats or cools the light emitting element. Accordingly, for example, the abnormality processor can determine whether or not the temperature detector is detecting the temperature normally based on the detection result of the temperature detector and the operation of the heating and cooling unit. Malfunction of heating and cooling the light emitting element can thus be prevented even in the event that the temperature detector cannot detect the temperature normally.

According to one or more embodiments of the present invention, a projector and head-up display device that can prevent malfunction in heating and cooling of a light emitting element can be provided, even when the temperature of the light emitting element cannot be detected normally.

According to one or more embodiments of the present invention, a method for maintaining proper operation of a projector may comprise: detecting a temperature in the projector; performing either a heating process or a cooling process based on the detected temperature; redetecting the temperature in the projector; and determining whether or not the temperature was detected normally based on the redetected temperature.

According to one or more embodiments, the method may further comprise: detecting a current value supplied to a heating and cooling unit that performs the heating process or the cooling process; and determining whether or not the temperature was detected normally based on the detected current and temperature.

According to one or more embodiments, the method may further comprise: switching an operation of a heating and cooling unit that performs the heating process or the cooling process;
detecting a voltage applied to the heating and cooling unit; and determining whether or not the temperature is being detected normally based on the detected voltage and temperature.

According to one or more embodiments, the method may further comprise: performing a notification operation of a temperature abnormality when the detecting of the temperature is determined to be abnormal; and performing a protection operation of the light emitting element that includes a lowering of an emission amount of the light emitting element, disabling emission of the light emitting element, and disabling of the projector.

### Brief Description of the Drawings

FIG. 1 is a schematic diagram of an HUD device according to one or more embodiments of the present invention.
FIG. 2 is a block diagram illustrating a configuration of a projector according to one or more embodiments of the present invention.
FIG. 3 is a graph showing an example of a correlation between a voltage of a thermistor and a temperature detected by the thermistor according to one or more embodiments of the present invention.
FIG. 4 is a graph showing an example of a correlation between a supply current value of a Peltier element and the temperature detected by the thermistor according to one or more embodiments of the present invention.
FIG. 5 is a flowchart for describing a first example of a procedure to determine whether or not a thermistor is detecting a temperature normally according to one or more embodiments of the present invention.
FIG. 6 is a flowchart for describing a second example of a procedure to determine whether or not a thermistor is detecting a temperature normally according to one or more embodiments of the present invention.
FIG. 7 is a block diagram illustrating a configuration of a projector according to one or more embodiments of the present invention.
FIG. 8 is a flowchart for describing a third example of a procedure to determine whether or not a thermistor is detecting a temperature normally according to one or more embodiments of the present invention.
FIG. 9 is a graph showing an example of the correlation between the supply current value of the Peltier element, with a temperature change of a switch taken into consideration, and the temperature detected by the thermistor according to one or more embodiments of the present invention.
FIG. 10 is a flowchart for describing a fourth example of a procedure to determine whether or not a thermistor is detecting a temperature normally according to one or more embodiments of the present invention.
FIG. 11 is a flowchart for describing a fifth example of a procedure to determine whether or not a thermistor is detecting a temperature normally according to one or more embodiments of the present invention.
FIG. 12 is a block diagram illustrating a configuration of a projector according to one or more embodiments of the present invention.

### Detailed Description of the Embodiments

One or more embodiments of the present invention will be described below with reference to drawings. Below, a head-up display device is referred to as an HUD device.

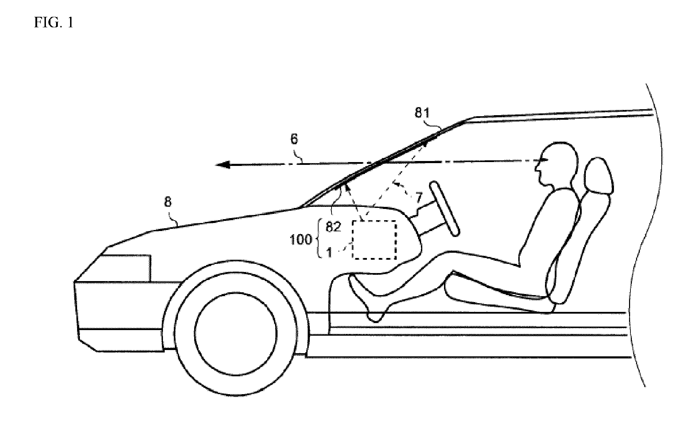

FIG. 1 is a schematic diagram of an HUD device according to one or more embodiments of the present invention. For example, the HUD device 100 according to one or more embodiments may be mounted in a vehicle 8. The HUD device 100 is not limited for use in an automotive vehicle but may be mounted in other passenger vehicles (for example, an aircraft or the like). For example, the HUD device 100 is a display device that projects a scanning laser light 7 (projection light) from a projector 1 toward a windshield 81 of the vehicle 8 and displays a projection image superimposed within a field of vision of a user. In FIG. 1, the arrow 6 of the dashed line illustrates a line of sight of the user seated in a driver's seat of the vehicle 8.

As illustrated in FIG. 1, according to one or more embodiments, a combiner 82 is affixed on an inside surface of the windshield 81. This combiner 82 is a projection member for displaying the projection image of the projector 1 within the field of vision of the user and is formed, for example, by using a semipermeable reflective material such as a half mirror. A virtual image is formed in a predetermined region of the combiner 82 by projecting the scanning laser light 7 from the projector 1 to the combiner 82. For this reason, the user viewing a front direction of the vehicle 8 (that is, a direction of the line of sight 6) can simultaneously visually recognize an external image in front of the vehicle 8 and the projection image projected from the projector 1.

### (First Example)

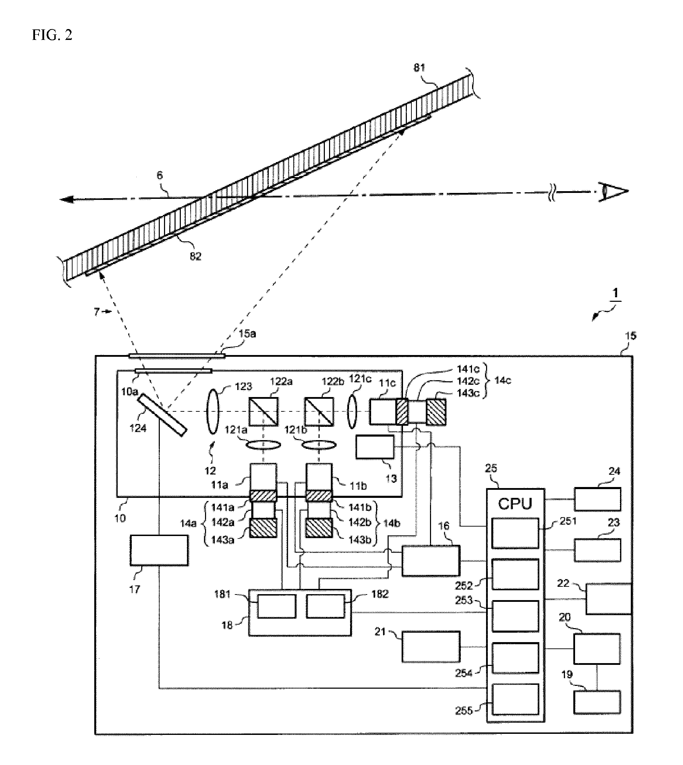

Next, one or more embodiments of a first example will be described. FIG. 2 is a block diagram illustrating one or more embodiments of the first example. As illustrated in FIG. 2, in the first example, a projector 1 is equipped with a housing 10, laser diodes 11a to 11c, an optical system 12, a thermistor 13, and heating and cooling units 14a to 14c. Below, the laser diodes are referred to as LDs. Furthermore, the projector 1 is further equipped with a main body enclosure 15, an LD driver 16, a mirror servo part 17, a heating and cooling driver 18, a power source 19, a power source controller 20, a current detector 21, an input and output I/F 22, an operation part 23, a storage unit 24, and a CPU 25. Additionally, the projector 1 may further be equipped with a voice output part (such as a speaker) that notifies the user of malfunctions and the like of the device (for example, a temperature abnormality of the LDs 11a to 11c) by a voice.

The housing 10 is an airtight enclosure part mounted with the LDs 11a to 11c, the optical system 12, the thermistor 13, and the heating and cooling units 14a to 14c. Furthermore, a window part 10a for emitting to the outside the scanning laser light 7 emitted from the optical system 12 and an aperture (not illustrated) disposed with heat conducting members 141 a to 141c described below are formed in the housing 10. The window part 10a is formed, for example, by using glass, a translucent resin material, or the like.

The LD 11a is a light emitting element that emits a blue laser light. LD 11b is a light emitting element that emits a green laser light. LD 11c is a light emitting element that emits a red laser light.

The optical system 12 is configured to include collimator lenses 121a to 121c, beam splitters 122a and 122b, a condenser lens 123, and a MEMS mirror 124. The collimator lenses 121 a to 121c are optical elements that convert the laser lights emitted from the LDs 11a to 11c to parallel lights. Moreover, the beam splitters 122a and 122b are optical elements, such as dichroic mirrors, that reflect light of a predetermined wavelength and transmit light of other wavelengths.

As illustrated in FIG. 2, according to a first example of one or more embodiments, the blue laser light emitted from the LD 11a is converted to parallel light by the collimator lens 121a, reflected by the beam splitter 122a, and arrives at the condensing lens 123. Moreover, the green laser light emitted from the LD 11b is converted to parallel light by the collimator lens 121b, and reflected by the beam splitter 122b. The reflected green laser light is transmitted through the beam splitter 122a and arrives at the condensing lens 123. Moreover, the red laser light emitted from the LD 11c is converted to parallel light by the collimator lens 121 c, is transmitted through the beam splitters 122a and 122b, and arrives at the condensing lens 123.

The condensing lens 123 is an optical element that converges the incident laser lights emitted from the LDs 11a to 11c via the collimator lenses 12 1 a to 121 c and the beam splitters 122a and 122b onto a light reflecting surface of the MEMS mirror 124. The MEMS mirror 124 is an optical reflecting element that reflects the laser light converged by the condensing lens 123. The MEMS mirror 124 reflects the laser lights as the scanning laser light 7 by changing the reflection direction of the laser lights by driving in a bi-axial direction. This scanning laser light 7 is emitted outside the housing 10 and the main body enclosure 15 by passing through the window part 10a of the housing 10 and a light emission opening 15a described below, and is projected to the combiner 82 on the windshield 81.

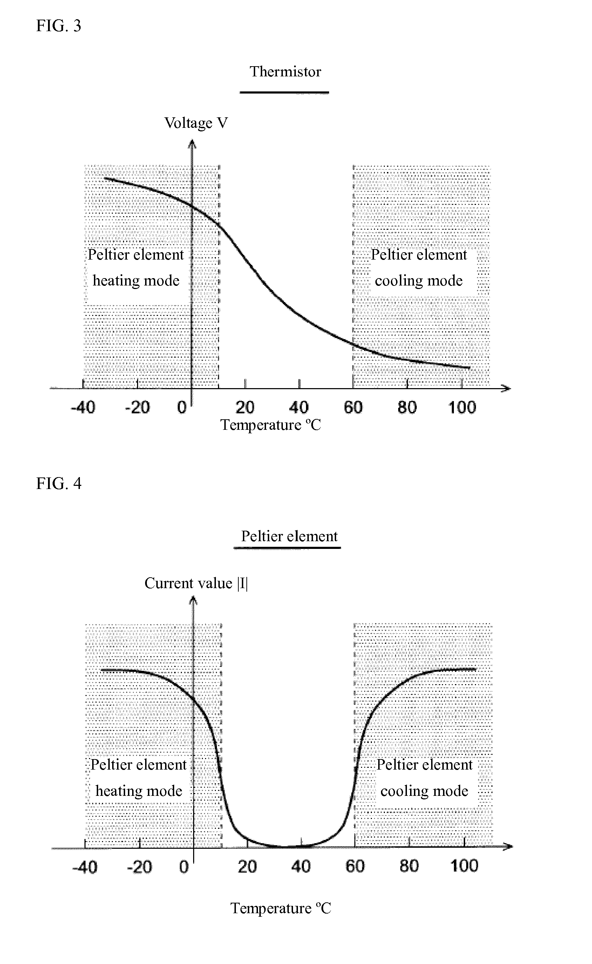

The thermistor 13 is a temperature detector provided inside the housing 10 to measure environmental temperature around the LDs 11a to 11c. FIG. 3 is a graph showing an example of a correlation between a voltage of the thermistor and a temperature detected by the thermistor. The temperature of the LDs 11a to 11c can be estimated by the thermistor 13 detecting the environmental temperature using a correlation like that shown in FIG. 3. Moreover, the thermistor 13 is disposed near the LD 11c. This is because an upper limit of a guaranteed temperature range (maximum rated value) of the LD 11c that emits the red laser light is the lowest out of each LD 11a to 11c. This enables more reliable protection of the LD 11c with the lowest maximum rated value of temperature. In FIG. 2 one thermistor 13 is used to measure temperature of the LDs 11a to 11c, but a plurality of thermistors 13 may be used to individually measure temperatures of each LD 11a to 11c.

The heating and cooling units 14a to 14c heat or cool the LDs 11a to 11c based on the temperature detected by the thermistor 13. Each heating and cooling unit 14a to 14c is respectively configured to include heat conducting members 141 a to 141 c, Peltier elements 142a to 142c, and heat sinks 143a to 143c.

The heat conducting members 141 a to 141c are configured using, for example, a metal material such as Cu, Au, or the like, a ceramic material with high heat conductivity, or the like, and heat is conducted between the LDs 11a to 11c and the Peltier elements 142a to 142c. For example, when cooling the LDs 11a to 11c, the heat conducting members 141 a to 141c conduct the heat of the LDs 11a to 11c to the Peltier elements 142a to 142c. Moreover, the heat conducting members 141a to 141c conduct the heat of the Peltier elements 142a to 142c to the LDs 11a to 11c when heating each LD 11a to 11c.

The Peltier elements 142a to 142c are thermoelectric elements using the Peltier effect. The Peltier elements 142a to 142c heat or cool the LDs 11 a to 11c according to a supply current I thereof. This supply current I is supplied based on the detected temperature by the thermistor 13. FIG. 4 is a graph showing an example of a correlation between a supply current value of the Peltier elements and a temperature detected by the thermistor. |I| indicates an absolute value of the supply current I of the Peltier elements 142a to 142c. In reality, the polarity (e.g., the flow direction) of the supply current I is inverted from when the Peltier elements 142a to 142c heat the LDs 11a to 11c to when the Peltier elements 142a to 142c cool the LDs 11a to 11c. As shown in FIG. 4, the supply current value |I| of the Peltier elements 142a to 142c change according to the detected temperature by the thermistor 13. In particular, the current value |I| increases rapidly to heat or cool the LDs 11a to 11c when the detection temperature becomes lower than a first temperature threshold (for example, 10°C) or higher than a second temperature threshold (for example, 60°C).

The heat sinks 143a to 143c are heat radiating parts for cooling the Peltier elements 142a to 142c.

Furthermore, each heat conducting member 141 a to 141c is provided in each opening (not illustrated) formed in the housing 10, sealing each opening. Each heat conducting member 141 a to 141c c is thermally connected to each LD 11a to 11c inside the housing 10 and is thermally connected to a surface on one side of each Peltier element 142a to 142c outside the housing 10. This surface on one side is a surface for the Peltier elements 142a to 142c to generate heat to be conducted to the heat conducting members 141 a to 141c c and for absorbing heat conducted from the heat conducting members 141a to 141c. When the heating and cooling units 14a to 14c heat the LDs 11a to 11c, the Peltier elements 142a to 142c generate heat on a surface on one side (that is, the surface on the heat conducting members 141 a to 141c side) and absorb heat on the other side (that is, the surface on the heat sinks 143a to 143c side). Meanwhile, while the heating and cooling units 14a to 14c cool the LDs 11a to 11c, the Peltier elements 142a to 142c absorb heat on the surface on one side and generate heat on the surface on the other side.

Furthermore, outside of the housing 10, the heat sinks 143a to 143c are thermally connected to a surface on the other side of each Peltier element 142a to 142. The LDs 11a to 11c and the heat conducting members 141 a to 141 c, and the heat conducting members 141 a to 141c and the Peltier elements 142a to 142c, are respectively thermally connected using, for example, grease having high heat conductivity. Similarly, the Peltier elements 142a and 142c and the heat sinks 143a to 143c are thermally connected using, for example, grease having high heat conductivity.

The main enclosure 15 is mounted with the housing 10, the LD driver 16, the mirror servo part 17, the heating and cooling driver 18, the power source 19, the power source controller 20, the current detector 21, the input and output I/F 22, the operation part 23, the storage unit 24, and the CPU 25. Moreover, the light emission opening 15a that emits the scanning laser light 7 emitted by passing through the window part 10a of the housing 10 from the optical system 12 is formed in the main body enclosure 15. The light emission opening 15a may be an opening, but it is desirable to be formed by using glass, translucent resin material, or the like. Doing so prevents the intrusion of dust, moisture (for example, water droplets, air including moisture), and the like into the main body enclosure 15.

The LD driver 16 is an LD drive part that controls the drive of each LD 11a to 11c and is configured to include a blue LD driver (not illustrated), a green LD driver (not illustrated), and a red LD driver (not illustrated). The blue LD driver performs drive controls such as emission of the LD 11a and light output. The green LD driver performs drive controls such as emission of the LD 11b and light output. The red LD driver performs drive controls such as emission of the LD 11c and light output.

The mirror servo part 17 is a drive controller that controls driving of the MEMS mirror 124 based on control signals input from the CPU 25. For example, the mirror servo part 17 drives the MEMS mirror 124 according to a horizontal synchronization signal from the CPU 25 and deflects a reflection direction of the laser light by the MEMS mirror 124 to a horizontal direction. Moreover, the mirror servo part 17 drives the MEMS mirror 124 according to a vertical synchronization signal from the CPU 25 and deflects the reflection direction of the laser light by the MEMS mirror 124 to a vertical direction.

The heating and cooling driver 18 is configured to include a Peltier controller 181 and a switch 182 and controls the heating operation and cooling operation for each LD 11a to 11c by each heating and cooling unit 14a to 14c. The Peltier controller 181 controls the drive of each Peltier element 142a to 142c. Moreover, the switch 182 switches each operation (heating operation, cooling operation, operation disabling, and the like) of each Peltier element 142a to 142c. The switch 182 supplies the supply current I to each Peltier element 142a to 142c based on control signals (for example, PWM signals) transmitted from the Peltier controller 181. A field effect transistor (FET), for example, is used for this switch 182.

The power source 19 is an electric power supply part that receives a supply of electric power from an electric power source such as a storage battery (not illustrated) or the like of the vehicle 8. The power source controller 20 converts the electric power supplied from the power source 19 to a predetermined voltage and current corresponding to the components of the projector 1 and supplies the converted electric power to the components.

The current detector 21 monitors currents flowing to the components controlled by control signals of the CPU 25. For example, the current detector 21 monitors the current component of the electric power supplied to the Peltier elements 142a to 142c and the power source 19 and detects changes in the currents thereof.

The input and output I/F 22 is a communication interface for wired communication or wireless communication with an external device. The operation part 23 is an input unit that accepts operation inputs from the user.

The storage unit 24 is a non-volatile storage medium that stores programs used by the components of the projector 1 and control information. Additionally, the storage unit 24 also stores a corresponding operation table, image information projected to the combiner 82, and the like. In the corresponding operation table, in the event that the temperature detected by the thermistor 13 is not detected normally, operations that the projector 1 executes (for example, a protection operation, a notification operation, and the like described below) are set in association with operations such as heating and cooling executed by the Peltier elements 142a to 142c. In FIG. 2, the storage unit 24 is a separate component from the CPU 25, but the storage unit 24 is not limited to this example and may be included in the CPU 25.

The CPU 25 is a controller that controls the components of the projector 1 using programs and control information and the like stored in the storage unit 24. This CPU 25 has a video processor 251, an LD controller 252, a heating and cooling controller 253, an abnormality processor 254, and an operation controller 255.

The video processor 251 generates information based on programs stored in the storage unit 24, information input from the input and output I/F 22, information stored in the storage unit 24, and the like. Moreover, the video processor 251 converts the generated image information to image data of three colors of red (R), green (G), and blue (B). The converted image data of three colors are output to the LD controller 252. The LD controller 252 generates and outputs to the LD driver 16 a light control signal for each LD 11a to 11c based on the image data of three colors. The laser lights emitted from the LDs 11a to 11c based on the light control signals are scanned two dimensionally by driving the MEMS mirror 124. An image based on the image information is thus proj ected to the combiner 82 on the windshield 81.

The heating and cooling controller 253 outputs control signals for performing drive control of the heating and cooling units 14a to 14c to the heating and cooling driver 18.

The abnormality processor 254, based on detection results of the thermistor 13 and the operation of the heating and cooling units 14a to 14c, determines whether or not the thermistor 13 is detecting the temperature normally. This is in order to prevent the heating and cooling units 14a to 14c from malfunctioning. For example, the abnormality processor 254 determines whether or not the thermistor 13 is detecting the temperature normally in the event that the temperature detected by the thermistor 13 is lower than the first temperature threshold to which heating the LDs 11a to 11c should be heated (for example, 10°C). Moreover, the abnormality processor 254 also determines whether or not the thermistor 13 is detecting the temperature normally in the event that the temperature detected by the thermistor 13 is higher than the second temperature threshold to which cooling the LDs 11a to 11c should be cooled (for example, 60°C).

These determinations are performed based on a correlation between a change in the temperature detected by the thermistor 13 and the operation of the heating and cooling units 14a to 14c detected by the current detector 21. For example, when the heating and cooling units 14a to 14c perform a heating or cooling operation, in the event that the temperature detected by the thermistor 13 does not change, the abnormality processor 254 determines that the thermistor 13 is operating abnormally. Meanwhile, when the temperature detected by the thermistor 13 changes, the abnormality processor 254 determines that the thermistor 13 is operating normally.

The operation controller 255 performs the protection operation of the LDs 11a to 11c when the abnormality processor 254 determines that the thermistor 13 is not detecting the temperature normally. Examples of protection operations include decreasing the light amount in the LDs 11a to 11c, disabling emission of the LDs 11a to 11c, shutting down a projection application of the projector 1, disabling operation of the projector 1, and the like. By doing so, the protection operation of the LDs 11a to 11c can be automatically executed in the event that the thermistor 13 is determined to be not detecting the temperature normally. Operation failures and breakdowns of the LDs 11a to 11c can therefore be prevented.

Furthermore, the operation controller 255 may perform the notification operation for notifying temperature abnormalities of the light source (LDs 11a to 11c). Examples of notification operations include displaying notification contents to a projection surface (e.g., the combiner 82 on the windshield 81), voice output of the notification contents, and the like. By doing so, the notification operation of temperature abnormality can prompt the user to execute the protection operation of the LDs 11 a to 11c in the event that the thermistor 13 is determined to be not detecting the temperature normally. Operation failures and breakdowns of the LDs 11a to 11c can therefore be prevented. After executing this notification operation, a protection operation such as described above may further be performed, or normal operation may continue as before without performing a protection operation other than the notification operation.

Furthermore, if displaying a notification such as a temperature abnormality, it is desirable to project the projection image to the combiner 82 using a laser diode other than the LD 11c (for example, the LD11b or the LD 11c), which has the lowest maximum rated value of the guaranteed temperature range. Moreover, it is further desirable to project the projection image using the LD 11a alone, which has the highest rated value of the guaranteed temperature range. Doing so can prevent degradation or damage to the LD 11c and can lengthen the life thereof because the LD 11c, which is the weakest in use at high temperatures, is not used even if the temperature of the LDs 11a to 11c are higher than, for example, the second temperature threshold.

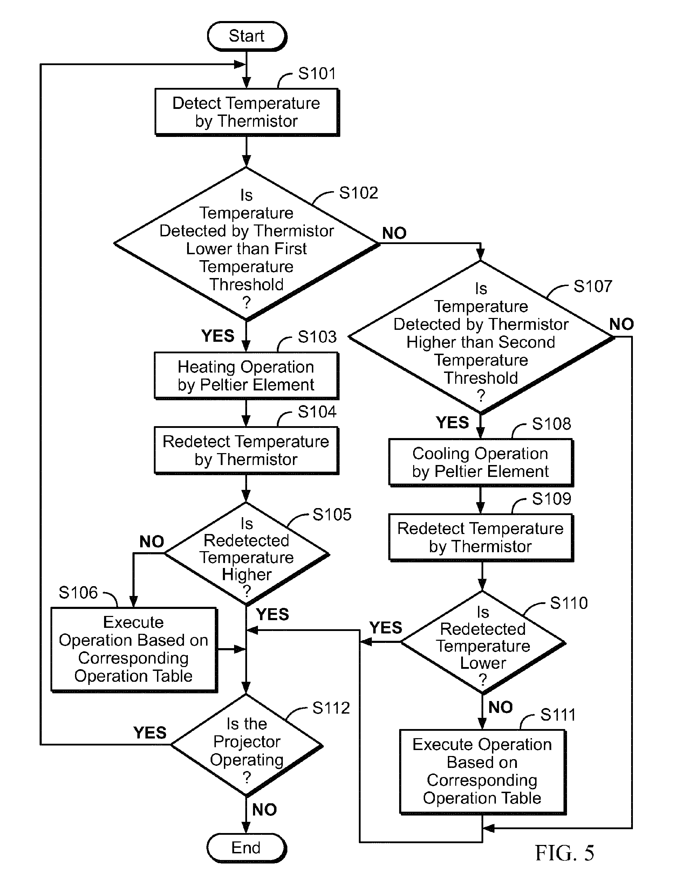

FIG. 5 is a flowchart for describing an example of a procedure to determine whether or not the thermistor is detecting the temperature normally in one or more embodiments of the first example.

When the projector 1 is booted (power source ON), the thermistor 13 detects the temperature around the LDs 11a to 11c (step S101) and determines whether or not the detected temperature is lower than the first temperature threshold (for example, 10°C) (step S102).

If the temperature is determined to be lower than the first temperature threshold (YES at step S102), the value |I| of the current I supplied to the Peltier elements 142a to 142c is increased, and the heating operation of the LDs 11a to 11c is performed (step S103). The thermistor 13 then redetects the temperature (step S104), and the redetected temperature is determined whether or not it is higher than the temperature detected in step S101 (step S105). If the temperature is determined to be higher (YES at step S 105), the thermistor 13 is determined to be operating normally, and the process proceeds to step S 112. Meanwhile, if the temperature is determined not to be higher (NO at step S105), the thermistor 13 is determined to be not operating normally, and the operation based on the corresponding operation table read from the storage unit 24 (the protection operation, the notification operation, or the like) is executed (step S106). The process then proceeds to step S 112.

Meanwhile, if the temperature is determined to be above the first temperature threshold (NO at step S102), the detected temperature is determined whether or not it is higher than the second temperature threshold (for example, 60°C) (step S107). If the temperature is determined to be lower than the second temperature threshold (NO at step S107), the process proceeds to step S112.

Furthermore, if the temperature is determined to be higher than the second temperature threshold (YES at step S107), the value |I| of the current I supplied to the Peltier elements 142a to 142c is increased, and the cooling operation of the LDs 11a to 11c is performed (step S108). The polarity of the supply current I of the Peltier elements 142a to 142c in this step S108 is the reverse of the supply current I of the Peltier elements 142a to 142c in step S103. The thermistor 13 then redetects the temperature (step S109), and the redetected temperature is determined whether or not it is lower than the temperature detected in step S101 (step S110). If the temperature is determined to be lower (YES at step S110), the thermistor 13 is determined to be operating normally, and the process proceeds to step S 112. Moreover, if the temperature is determined not to be lower (NO at step S110), the thermistor 13 is determined to be not operating normally, and an operation based on the corresponding operation table read from the storage unit 24 (the protection operation, the notification operation, or the like) is executed (step S111). The process then proceeds to step S112.

In step S112, it is determined whether or not the projector 1 is operating (e.g., whether the power source is ON). If the projector is determined to be operating (YES at step S112), the process returns to step S101. Meanwhile, if the projector is determined not to be operating (e.g., power source OFF) (NO at step S 112), the process of FIG. 5 terminates.

In the first example, according to one or more embodiments, the HUD device 100 is equipped with the projector 1. Moreover, the projector 1 according to one or more embodiments of the first example is equipped with the LDs 11a to 11c, the thermistor 13, the heating and cooling units 14a to 14c, and the abnormality processor 254. The LDs 11a to 11c emit the laser light (projection light), and the thermistor 13 detects the temperature around the LDs 11a to 11c. The heating and cooling units 14a to 14c heat or cool the LDs 11a to 11c based on the detected temperature. The abnormality processor 254, based on the detection results of the thermistor 13 and the operation of the heating and cooling units 14a to 14c, determines whether or not the thermistor 13 is detecting the temperature normally.

As a result, the heating and cooling units 14a to 14c heat or cool the LDs 11a to 11c based on the temperature detected by the thermistor 13. Moreover, the change in temperature that the thermistor 13 detects indicates whether or not the LDs 11a to 11c are being heated or cooled. Therefore, the thermistor 13 is not detecting the temperature normally if there is no change in the temperature detected by the thermistor 13 when the heating and cooling units 14a to 14c heat or cool the LDs 11a to 11c. Accordingly, the abnormality processor 254, based on the detection results by the thermistor 13 and the operation of the heating and cooling units 14a to 14c, can determine whether or not the thermistor 13 is detecting the temperature normally. Malfunction of heating and cooling the LDs 11a to 11c can thus be prevented even in the event that the thermistor 13 cannot detect the temperature normally.

Furthermore, the projector 1 according to one or more embodiments of the first example is further equipped with the operation controller 255. The operation controller 255 performs at least one of either the protection operation of the LDs 11a to 11c or the notification operation of the temperature abnormality of the LDs 11a to 11c when the thermistor 13 is determined not to be detecting the temperature normally.

As a result, the protection operation of the LDs 11a to 11c can be automatically executed, or the notification operation of the temperature abnormality can prompt the user to execute the protection operation of the LDs 11a to 11c in the event that the thermistor 13 is determined to be not detecting the temperature normally. Accordingly, operation failures and breakdowns of the LDs 11a to 11c can therefore be reliably prevented.

Furthermore, in the projector 1 according to one or more embodiments of the first example, the protection operation of the operation controller 255 includes at least one of the following: lowering the emission amount of the LDs 11a to 11c, disabling the emission of the LDs 11a to 11c, or disabling the operation of the projector 1. By doing so, the protection operation prevents degradation or damage of the LDs 11a to 11c and can extend the life of the LDs 11a to 11c.

### (Second Example)

In a projector 1, according to one or more embodiments of a second example, an abnormality processor 254, based on a temperature detected by a thermistor 13 and a change in a supply current I of heating and cooling units 14a to 14c monitored by a current detector 21, determines whether the thermistor 13 is detecting the temperature normally. One or more embodiments of the second example may be similar to one or more embodiments of the first example except for the differences described below. Moreover, the same reference numerals are attached to configurations that may be the same as those in one or more embodiments of the first example, and descriptions thereof will be omitted.

In one or more embodiments of the second example, the abnormality processor 254, based on detection results of the thermistor 13 and the current detector 21, determines whether or not the thermistor 13 is detecting the temperature normally. This is in order to prevent the heating and cooling units 14a to 14c from malfunctioning. This determination is performed, for example, based on a correlation between a change in the temperature detected by the thermistor 13 and a change in a voltage |I| of a supply current I detected by the current detector 21.

For example, a current value |I| detected by the current detector 21 changes when the LDs 11a to 11c reaches a second temperature threshold, but if the temperature detected by the thermistor 13 does not change, the abnormality processor 254 determines that the thermistor 13 is operating abnormally. Meanwhile, the current value |I| detected by the current detector 21 changes according a heating or cooling operation when the temperature reaches a first temperature threshold or the second temperature threshold. Moreover, the abnormality processor 254 determines that the thermistor 13 is operating normally when the temperature detected by the thermistor 13 also changes.

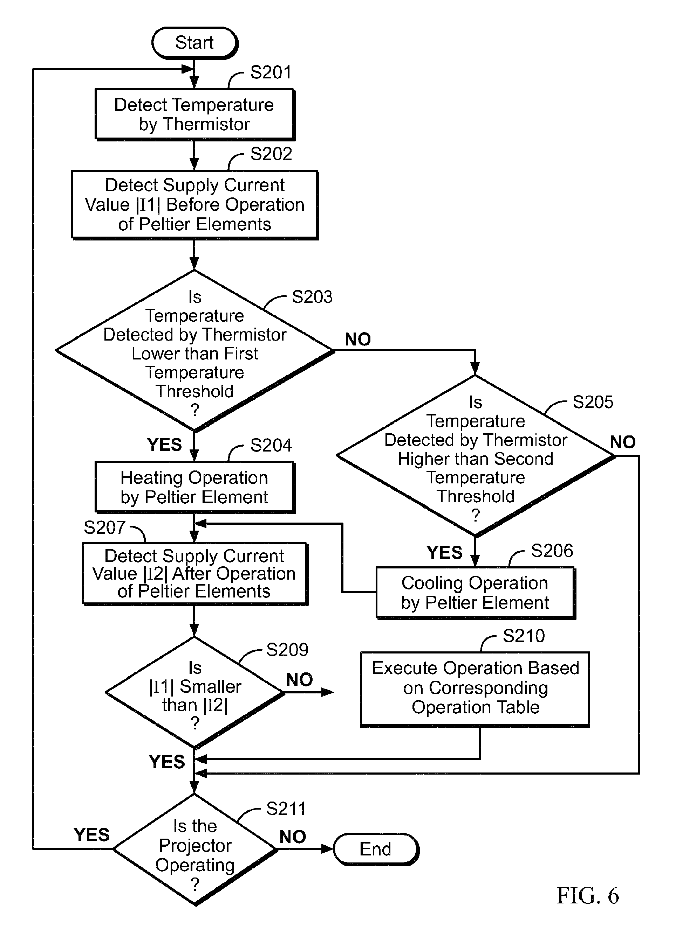

FIG. 6 is a flowchart for describing the procedure to determine whether or not the thermistor is detecting the temperature normally in one or more embodiments of the second example.

When the projector 1 is booted (power source ON), the thermistor 13 detects the temperature around the LDs 11a to 11c (step S201), and the current detector 21 detects a first supply current value |I1| of Peltier elements 142a to 142c (step S202). The detected temperature is then determined whether or not it is lower than the first temperature threshold (for example, 10°C) (step S203).

If the temperature is determined to be lower than the first temperature threshold (YES at step S203), the value |I| of the current I supplied to the Peltier elements 142a to 142c is increased, and the heating operation of the LDs 11a to 11c is performed (step S204). The process then proceeds to step S207.

Meanwhile, if the temperature is determined to be the first temperature threshold or higher (NO at step S203), the detected temperature is determined whether or not it is higher than the second temperature threshold (for example, 60°C) (step S205). If the temperature is determined to be the second temperature threshold or lower (NO at step S205), the process proceeds to step S211. If the temperature is determined to be higher than the second temperature threshold (YES at step S205), the value |I| of the current I supplied to the Peltier elements 142a to 142c is increased, and the cooling operation of the LDs 11a to 11c is performed (step S206). The polarity of the supply current I of the Peltier elements 142a to 142c in step S206 is the reverse of the supply current I of the Peltier elements 142a to 142c in step S204. The process then proceeds to step S207.

In step S207, the current detector 21 detects a second supply current value |I2| of the Peltier elements 142a to 142c. This second supply current value |I2| is a value (absolute value) of a supply current I2 after the heating or cooling operation of the Peltier elements 142a to 142c.

Next, it is determined whether or not the first supply current value |I1| is smaller than the second supply current value |I2| (step S209). If the first supply current value |I| is determined to be smaller (YES at step S209), the thermistor 13 is determined to be operating normally, and the process proceeds to step S211. Meanwhile, if the first supply current value |I| is determined not to be smaller (NO at step S209), the thermistor 13 is determined to be not operating normally, and an operation based on a corresponding operation table read from a storage unit 24 (a protection operation, a notification operation, or the like) is executed (step S210). The process then proceeds to step S211.

In step S211, it is determined whether or not the projector 1 is operating (e.g., whether the power source is ON). If the projector is determined to be operating (YES at step S211), the process returns to step S201. Meanwhile, if the projector is determined to be not operating (e.g., power source OFF) (NO at step S211), the process of FIG. 6 terminates.

According to one or more embodiments of the second example, the projector 1 is further equipped with the current detector 21. The current detector 21 detects the value |I| of the current I supplied to the heating and cooling units 14a to 14c. The abnormality processor 254, based on the detection results by the thermistor 13 and the current detector 21, determines whether or not the thermistor 13 is detecting the temperature normally.

The change in the current value |I| that the current detector 21 detects indicates the operation of the heating and cooling units 14a to 14c (for example, the heating operation, the cooling operation). Accordingly, the abnormality processor 254, by comparing the change in temperature that the thermistor 13 detects with the change in the current value |I| that the current detector 21 detects, can determine whether or not the thermistor 13 is detecting the temperature normally.

### (Third Example)

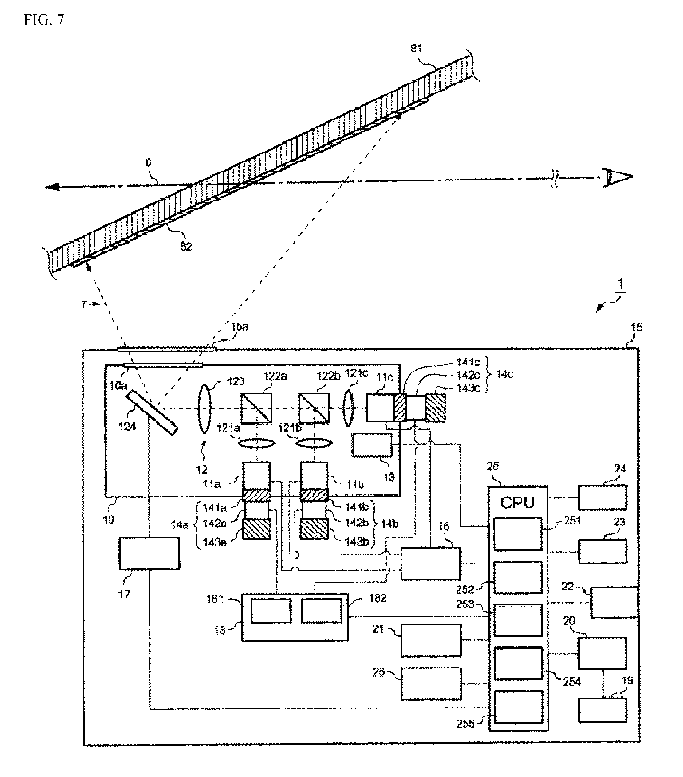

FIG. 7 is a block diagram illustrating a configuration of a projector according to one or more embodiments of a third example. As illustrated in FIG. 7, a projector 1 of the third embodiment is further equipped with a voltage detector 26 mounted in a main body enclosure 15. This voltage detector 26 monitors a voltage V that a switch 182 applies to Peltier elements 142a to 142c and detects a change in the voltage V applied thereto. Moreover, an abnormality processor 254, based on a temperature detected by a thermistor 13 and the voltage V applied by the switch 182, determines whether or not the thermistor 13 is detecting the temperature normally. One or more embodiments of the third example may be similar to one or more embodiments of the second example except for the differences described below. Moreover, the same reference numerals are attached to configurations that may be the same as those in the second example, and descriptions thereof will be omitted.

In one or more embodiments of the third example, the abnormality processor 254, based on detection results of the thermistor 13 and the voltage detector 26, determines whether or not the thermistor 13 is detecting the temperature normally. This is in order to prevent heating and cooling units 14a to 14c from malfunctioning. This determination is performed, for example, based on a correlation between a change in the temperature detected by the thermistor 13 and a change in the voltage V applied by the switch 182 detected by the voltage detector 26.

When an FET is used in the switch 182, for example, a temperature change causes a difference in ON resistance in the switch 182, which supplies a supply current I to the Peltier elements 142a to 142c. For example, when the temperature detected by the thermistor 13 is lower than a first temperature threshold (when the Peltier elements 142a to 142c perform a heating operation), the ON resistance of the switch 182 also becomes lower because a temperature of the switch 182 is in a low state. Because of this, the voltage V that the switch 182 applies to the Peltier elements 142a to 142c increases, and the supply current I of the Peltier elements 142a to 142c also increases. Meanwhile, when the temperature detected by the thermistor 13 is lower than a second temperature threshold (when the Peltier elements 142a to 142c perform a cooling operation), the ON resistance of the switch 182 becomes higher because the temperature of the switch 182 is also in a high state. Because of this, the voltage V that the switch 182 applies to the Peltier elements 142a to 142c decreases, and the supply current I of the Peltier elements 142a to 142c also decreases. Because the voltage V applied by the switch 182 correlates in this manner with the supply current I of the Peltier elements 142a to 142c, it can be said that the voltage V also correlates with the temperature detected by the thermistor 13. Therefore, using such a correlation can determine whether or not the thermistor 13 is detecting the temperature normally.

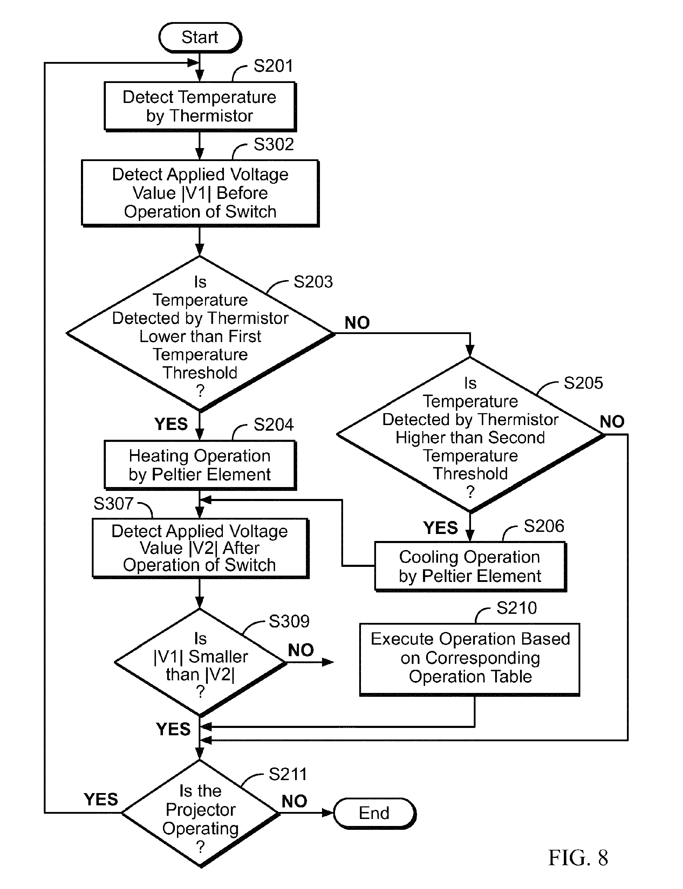

Next, a procedure that determines whether or not the thermistor 13 is detecting the temperature normally will be described. FIG. 8 is a flowchart for describing an example of a procedure to determine whether or not the thermistor is detecting the temperature normally in the third embodiment.

In one or more embodiments of the third example, the voltage detector 26 detects a first applied voltage value |V1| of the switch 182 (step S302) after the thermistor 13 detects a temperature around LDs 11a to 11c in step S201. Moreover, the voltage detector 26 detects a second applied voltage value |V2| of the switch 182 when a heating operation (step S204) or a cooling operation (S206) based on the temperature detected by the thermistor 13 (step S201) is performed (S307). This second applied voltage value |V2| is a value (absolute value) that the switch 182 applies to the Peltier elements 142a to 142c after the heating or cooling operation.

Next, it is determined whether or not the first applied voltage value |V1| is smaller than the second applied voltage value |V2| (step S309). If the first applied voltage value |V1| is determined to be smaller (YES at step S309), the thermistor 13 is determined to be operating normally, and the process proceeds to step S211. Meanwhile, if the first applied voltage value |V1| is determined not to be higher (NO at step S309), the thermistor 13 is determined to be not operating normally, and an operation based on a corresponding operation table read from a storage unit 24 (a protection operation, a notification operation, or the like) is executed (step S210). The process then proceeds to step S211.

The projector 1 according to one or more embodiments of the third example is further equipped with the switch 182 and the voltage detector 26. The switch 182 switches the operation of the heating and cooling units 14a to 14c. The voltage detector 26 detects the voltage V applied to the heating and cooling units 14a to 14c. The abnormality processor 254, based on the detection results by the thermistor 13 and the voltage detector 26, determines whether or not the thermistor 13 is detecting the temperature normally.

By doing so, the change in the voltage V applied to the heating and cooling units 14a to 14c switched by an operation by the switch 182 can determine the operation of the heating and cooling units 14a to 14c. Accordingly, the abnormality processor 254, by comparing the change in temperature that the thermistor 13 detects with the change in the voltage V that the voltage detector 26 detects, can determine whether or not the thermistor 13 is detecting the temperature normally.

### (Fourth Example)

In a projector 1 according to one or more embodiments of a fourth example, an abnormality processor 254, taking into consideration a change in a supply current value |I| accompanying a temperature change of a switch 182, determines whether a thermistor 13 is detecting a temperature normally. One or more embodiments of the fourth example may be similar to one or more embodiments of the second example except for the differences described below. Moreover, the same reference numerals are attached to configurations that may be the same as those in the second example of one or more embodiments, and descriptions thereof will be omitted.

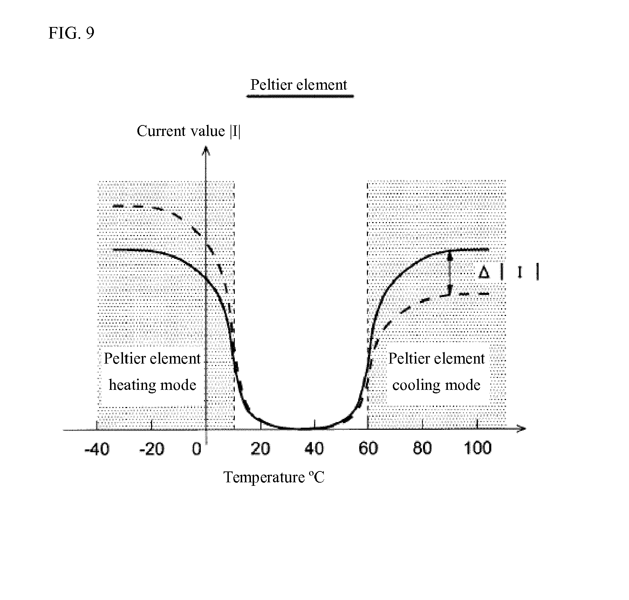

In the fourth example of one or more embodiments, a storage unit 24 stores a current difference threshold table. In this current difference threshold table, a current difference threshold value Δ |I| is set in relation to a temperature detected by the thermistor 13. The current difference threshold Δ |I| indicates in an absolute value a tolerance of a difference between supply current values when there is and is not a temperature change in the switch 182. FIG. 9 is a graph showing an example of a correlation between the supply current value of the Peltier elements, with the temperature change of the switch taken into consideration, and the temperature detected by the thermistor. In FIG. 9 the solid line indicates a correlation when there is no temperature change in the switch 182 and that the dashed line indicates a correlation when there is a temperature change in the switch 182.

As described above, when an FET, for example, is used for the switch 182, the supply current value |I| of the Peltier elements 142a to 142c rises as in FIG. 9 when the temperature of the switch 182 is low. Meanwhile, the supply current value |I| of the Peltier elements 142a to 142c falls as in FIG. 9 when the temperature of the switch 182 is high. It can thus be determined whether or not the thermistor 13 is detecting the temperature normally by whether or not an absolute value of the difference of the supply current value |I| before and after the heating or cooling operation by the Peltier elements 142a to 142c is greater than the current difference threshold Δ |I|.

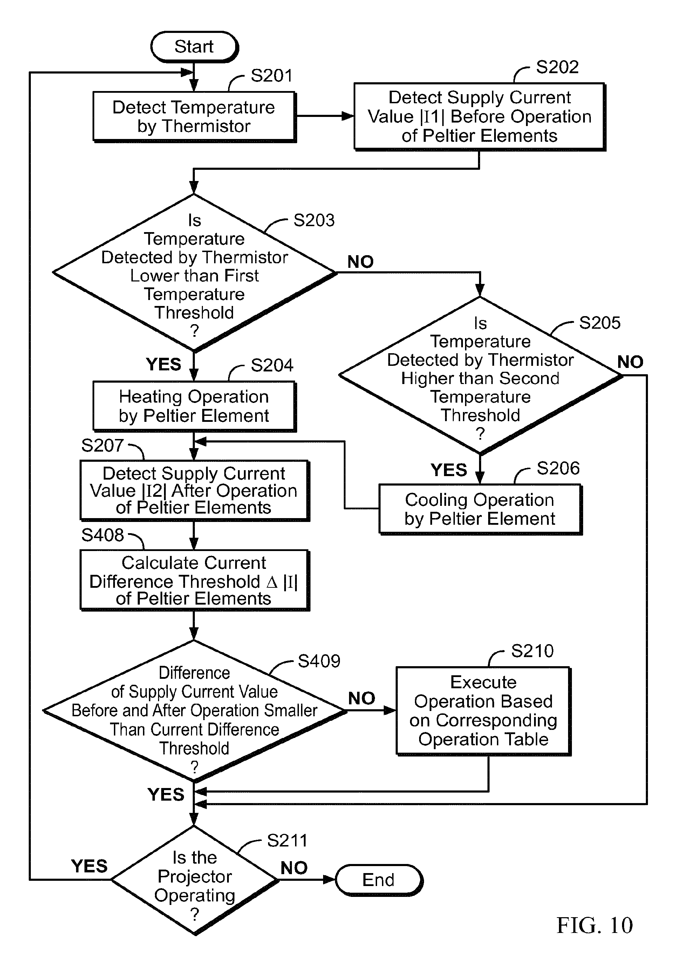

FIG. 10 is a flowchart for describing the procedure to determine whether or not the thermistor is detecting the temperature normally according to one or more embodiments of a fourth example of one or more embodiments.

In one or more embodiments of the fourth example, after a first supply current value |I1| is detected in step S202, a second supply current value |I2| is detected in step S207 when the heating operation (step S204) or the cooling operation (step S206) is performed. The first supply current value |I1| is a value of a current I1 supplied to the Peltier elements 142a to 142c before the heating or cooling operation. Moreover, the second supply current value |I2| is a value of a current I2 supplied to the Peltier elements 142a to 142c before the heating or cooling operation. The current difference threshold Δ |I| corresponding to the temperature detected in step S201 is then calculated based on the current difference threshold table read from the storage unit 24 (step S408).

Next, it is determined whether or not the difference (absolute value) between the first supply current value |I1| and the second supply current value |I2| is smaller than the current difference threshold Δ|I| (step S409). If the difference is determined to be smaller (YES at step S409), the thermistor 13 is determined to be operating normally, and the process proceeds to step S211. Meanwhile, if the difference is determined not to be smaller (NO at step S409), the thermistor 13 is determined to be not operating normally. Then, in step S210, an operation based on a corresponding operation table read from the storage unit 24 (a protecting operation, a notification operation, or the like) is executed, and the process proceeds to step S211.

### (Fifth Example)

In a projector 1 according to one or more embodiments of a fifth example, an abnormality processor 254, taking into consideration a change in an applied voltage V accompanying a temperature change of a switch 182, determines whether a thermistor 13 is detecting a temperature normally. One or more embodiments of the fifth example may be similar to one or more embodiments of the third example except for the differences described below. Moreover, the same reference numerals are attached to configurations that are the same as those in the third example, and descriptions thereof will be omitted.

According to one or more embodiments of the fifth example, storage unit 24 stores a voltage difference threshold table. In this voltage difference threshold table, a voltage difference threshold value Δ |V| is set in relation to a temperature detected by the thermistor 13. This voltage difference threshold value Δ |V| indicates in an absolute value a tolerance of a difference of an applied voltage |V| before and after commencing a heating or cooling operation when the thermistor 13 performs a normal detection.

As described above, when an FET, for example, is used for the switch 182, the voltage V applied by the switch 182 rises when the temperature of the switch 182 is low, and the voltage V applied by the switch 182 falls when the temperature of the switch 182 is high. It can thus be determined whether or not the thermistor 13 is detecting the temperature normally by whether or not the absolute value of the difference of the applied voltage value |V| before and after the heating or cooling operation by the Peltier elements 142a to 142c is greater than the voltage difference threshold Δ |V|.

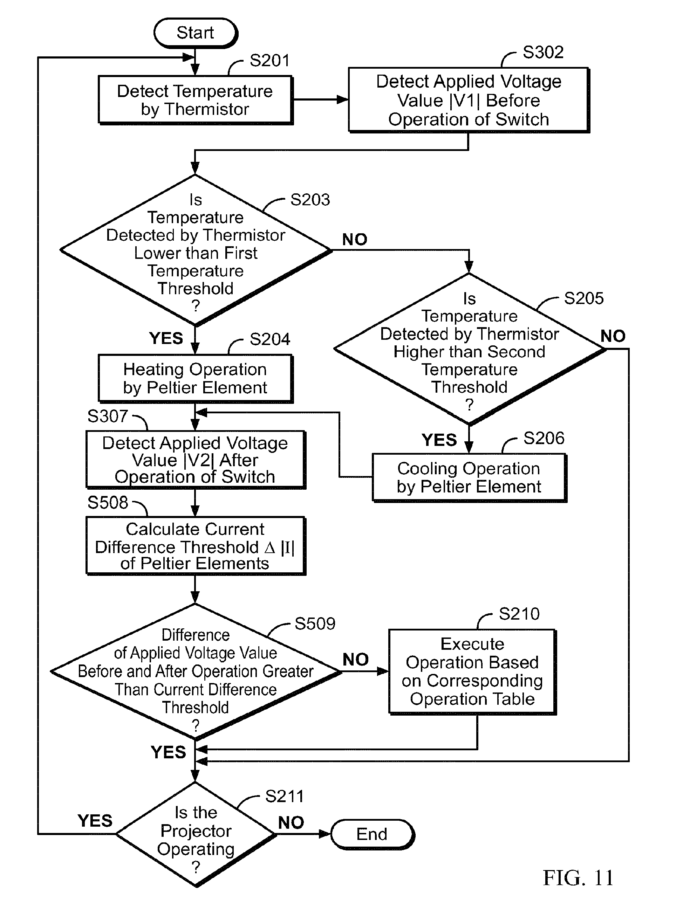

Next, a procedure that determines whether or not the thermistor 13 is detecting the temperature normally will be described. FIG. 11 is a flowchart for describing an example of the procedure to determine whether or not the thermistor is detecting the temperature normally in the fifth embodiment.

In one or more embodiments of the fifth example, after a first applied voltage value |V1| is detected in step S302, a second applied voltage value |V2| is detected in step S307 when a heating operation (step S204) or a cooling operation (step S206) is performed. The first applied voltage value |V1| is a value of the applied voltage V1 of the switch 182 before the heating or cooling operation. Moreover, the second applied voltage value |V2| is a value of the applied voltage V2 of the switch 182 before the heating or cooling operation. A voltage difference threshold Δ|V| corresponding to a temperature detected in step S201 is then calculated based on the voltage difference threshold table read from the storage unit 24 (step S508).

Next, it is determined whether or not the difference (absolute value) between the first applied voltage value |V1| and the second applied voltage value |V2| is smaller than the voltage difference threshold Δ |V| (step S509). If the difference is determined to be smaller (YES at step S509), the thermistor 13 is determined to be operating normally, and the process proceeds to step S211. Meanwhile, if the difference is determined not to be smaller (NO at step S509), the thermistor 13 is determined to be not operating normally. Then, in step S210, an operation based on a corresponding operation table read from the storage unit 24 (a protecting operation, a notification operation, or the like) is executed, and the process proceeds to step S211.

### (Sixth Example)

In one or more embodiments of the sixth example, the projector 1 is equipped with a plurality of thermistors 13. One or more embodiments of the sixth example may be similar to the previously described examples of one or more embodiments except for the differences described below. Moreover, the same reference numerals are attached to configurations that may be the same as those in the previously described examples, and descriptions thereof will be omitted.

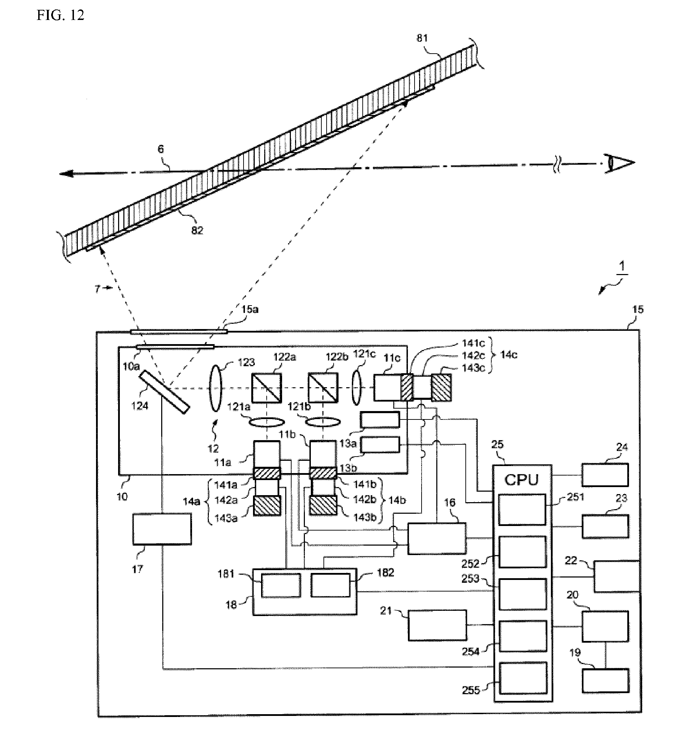

FIG. 12 is a block diagram illustrating a projector according to one or more embodiments of a sixth example. As illustrated in FIG. 12, in the projector 1, two thermistors 13a and 13b are disposed near an LD 11c. One or more embodiments of the sixth example are not limited to the example in FIG. 12 and three or more thermistors 13 may be disposed.

In normal operation, an environmental temperature around LDs 11a to 11c is detected using the thermistor 13a, and heating and cooling units 14a to 14c heat or cool the LDs 11a to 11c based on the temperature detected by the thermistor 13a. Moreover, an abnormality processor 254, based on a detection result of the thermistor 13a and an operation of the heating and cooling units 14a to 14c, determines whether or not the thermistor 13a is detecting the temperature normally. Here, if the thermistor 13a is determined to be not detecting the temperature normally, the operation switches to temperature detection by the remaining thermistor 13b, and the environmental temperature around the LDs 11a to 11c is detected using the thermistor 13b. The heating and cooling units 14a to 14c heat or cool the LDs 11a to 11c based on the temperature detected by the thermistor 13b.

According to one or more embodiments of the sixth example, the projector 1 is equipped with the plurality of thermistors 13, and when the thermistor 13a is determined to be not detecting the temperature normally, the remaining thermistor 13b detects the temperature. Doing so enables one of the plurality of thermistors 13 (for example, the thermistor 13a or 13b) to detect the temperature around the LDs 11a to 11c. Accordingly, it becomes difficult to generate a condition where the temperature of the LDs 11a to 11c cannot be detected.

Various examples of one or more embodiments of the present invention are described above. The embodiments described above are examples, that various modifications in each component or each combination of processes are possible, and that it is understood by those skilled in the art that such are within the scope of the present invention.

For example, in the one or more embodiments described above, the video processor 251, the LD controller 252, the heating and cooling controller 253, the abnormality processor 254, and the operation controller 255 are realized as functional parts of the CPU 25, but the present invention is not limited to this example. At least one part or all parts from the above may be realized by a physical component (for example, an electric circuit) or the like.

Furthermore, in the one or more embodiments described above, the optical system 12 has the MEMS mirror 124, but the present invention is not limited to this example. The optical system 12, instead of the MEMS mirror 124, may have a mirror member that reflects a laser light and an actuator that drives the mirror member in a bi-axial direction.

Furthermore, in the one or more embodiments described above, as illustrated in FIGS. 2, 7, and 12, for example, the thermistor 13 is disposed near the LD 11c, but the present invention is not limited to this example. The thermistor 13 may be disposed near the LD 11 a because the LD 11a, which emits a blue laser light, has the highest temperature among the LDs 11a to 11c. Doing so enables quick detection of a rise in the environmental temperature around the LDs 11a to 11c. It is therefore easier to control temperature so the temperature of the LDs 11a to 11c does not exceed the upper limit (maximum rated value) of the guaranteed temperature range.

Furthermore, in the one or more embodiments described above, 10°C is exemplified as the first temperature threshold and 60°C is exemplified as the second temperature threshold, but the present invention is not limited to this example. The first temperature threshold may set a lower limit (minimum rated value) of the guaranteed temperature range for any of the LDs 11a to 11c, and the minimum rated value of the LD with the highest minimum rated value may be set. Moreover, the second temperature threshold may set an upper limit (maximum rated value) of the guaranteed temperature range for any of the LDs 11a to 11c, and the maximum rated value of the LD with the lowest maximum rated value may be set.

Furthermore, in the one or more embodiments described above, the heating and cooling units 14a to 14c have the Peltier elements 142a to 142c respectively, but the present invention is not limited to this example. The heating and cooling units 14a to 14c, instead of the Peltier elements 142a to 142c, may have a heating member (a heater or the like) for heating the LDs 11 a to 11c and a cooling member (an air cooling fan, a water cooling member, or the like) for cooling the LDs 11a to 11c.

Furthermore, the one or more embodiments of the present invention are applied to the HUD device 100, but the present invention is not limited to this example. The one or more embodiments of the present invention are widely applicable if a device requires temperature control of a light source.

### Explanation of Reference Numerals

- 100: Head-up display device (HUD device)
- 1: Projector
- 10: Housing
- 10a: Window part
- 11a, 11b, 11c: Laser diode (LD)
- 12: Optical system
- 121a, 121b, 121c: Collimator lens
- 122a, 122b: Beam splitter
- 123: Condensing lens
- 124: MEMS mirror
- 13, 13a, 13b: Thermistor
- 14a, 14b, 14c: Heating and cooling unit
- 141a, 141b, 141c: Heat conducting member
- 142a, 142b, 142c: Peltier element
- 143a, 143b, 143c: Heat sink
- 15: Main body enclosure
- 15a: Light emission opening
- 16: LD driver
- 17: Mirror servo part
- 18: Heating and cooling driver
- 181: Peltier controller
- 182: Switch
- 19: Power source
- 20: Power source controller
- 21: Current detector
- 22: Input and output I/F
- 23: Operation part
- 24: Storage unit
- 25: CPU
- 251: Video processor
- 252: LD controller
- 253: Heating and cooling controller
- 254: Abnormality processor
- 255: Operation controller
- 26: Voltage detector
- 6: Line of sight of the user
- 7: Scanning laser light
- 8: Vehicle
- 81: Windshield
- 82: Combiner

## Claims

1. A projector (1) comprising:
a light emitting element configured to emit a projection light;
a first temperature detector configured todetect a temperature around the light emitting element;
a heating and cooling unit (14a, 14b, 14c) configured to heat or cool the light emitting element based on the detected temperature; and
an abnormality processor (254) configured to determine whether or not the first temperature detector is detecting the temperature normally based on a detection result of the first temperature detector.

2. The projector according to claim 1, wherein the light emitting element is a laser diode (11a, 11b, 11c).

3. The projector according to claim 1, wherein the first temperature detector is a thermistor (13, 13a, 13b).

4. The projector according to claim 1, wherein the heating and cooling unit (14a, 14b, 14c) comprises a Peltier element (142a, 142b, 142c), a heat conducting member (141a, 141b, 141c), and a heat sink (143a, 143b, 143c).

5. The projector according to claim 1, further comprising:
a current detector (21) configured to detect a value of a current supplied to the heating and cooling unit (14a, 14b, 14c),
wherein the abnormality processor (254) is configured to determine whether or not the first temperature detector is detecting the temperature normally based on the detection result of the first temperature detector and a detection result of the current detector (21).

6. The projector according to claim 1, further comprising:
a switch (182) configured to switche an operation of the heating and cooling unit (14a, 14b, 14c),and
a voltage detector (26) configured to detect a voltage applied to the heating and cooling unit (14a, 14b, 14c),
wherein the abnormality processor (254) is configured to determine whether or not the first temperature detector is detecting the temperature normally based on the detection result of the first temperature detector and a detection result of the voltage detector (26).

7. The projector according to any of claim 1 to 4, further comprising an operation controller (255) configured to perform a protection operation of the light emitting element.

8. The projector according to claim 7, wherein the operation controller (255) is configured to perform a notification operation of a temperature abnormality of the light emitting element when the first temperature detector is determined to be not detecting the temperature normally.

9. The projector according to claim 7, wherein the protection operation includes a lowering of an emission amount of the light emitting element, disabling emission of the light emitting element, and disabling of the projector.

10. The projector according to any of claim 1 to 3, further comprising:
a plurality of temperature detectors including a second temperature detector,
wherein the second temperature detector is configured to detect the temperature when the first temperature detector is determined to be not detecting the temperature normally.

11. A head-up display device (100), comprising the projector (1) according to any of claim 1 to 10.

12. A method for maintaining proper operation of a projector, comprising:
detecting a temperature in the projector (1);
performing either a heating process or a cooling process based on the detected temperature;
redetecting the temperature in the projector (1); and
determining whether or not the temperature was detected normally based on the redetected temperature.

13. The method according to claim 12, further comprising:
detecting a current value supplied to a heating and cooling unit (14a, 14b, 14c) configured to perform the heating process or the cooling process; and
determining whether or not the temperature was detected normally based on the detected current and temperature.

14. The method according to claim 12, further comprising:
switching an operation of a heating and cooling unit (14a, 14b, 14c) configured to perform the heating process or the cooling process;
detecting a voltage applied to the heating and cooling unit (14a, 14b, 14c) ; and
determining whether or not the temperature is being detected normally based on the detected voltage and temperature.

15. The method according to claim 12, further comprising:
performing a notification operation of a temperature abnormality when the detecting of the temperature is determined to be abnormal; and
performing a protection operation of the light emitting element that includes a lowering of an emission amount of the light emitting element, disabling emission of the light emitting element, and disabling of the projector.
